# EUROPÄISCHE PATENTSCHRIFT

(11) **EP 3 071 389 B1**
(45) Veröffentlichungstag und Bekanntmachung des Hinweises auf die Patenterteilung: **15.04.2020**
(21) Anmeldenummer: 14818890.7
(22) Anmeldetag: 24.11.2014
(51) Int. Cl.: B29C 45/77, B29C 45/76, B29C 45/28, B29C 45/27

(54) **VERFAHREN ZUM REGELN DER FÜLLUNG VON ZUMINDEST EINER KAVITÄT**
METHOD FOR CONTROLLING THE FILLING OF AT LEAST ONE CAVITY
PROCÉDÉ POUR RÉGLER LE REMPLISSAGE D'AU MOINS UNE CAVITÉ

(30) Priorität: 22.11.2013 DE 102013112954; 14.10.2014 DE 102014114874
(43) Veröffentlichungstag der Anmeldung: 28.09.2016
(73) Patentinhaber: Priamus System Technologies AG, 8200 Schaffhausen (CH); BADER, Christopherus, 8413 Neftenbach (CH)
(72) Erfinder: BADER, Christopherus, 8413 Neftenbach (CH)
(74) Vertreter: Patentanwälte und Rechtsanwalt Weiß, Arat & Partner mbB
(86) Internationale Anmeldenummer: PCT/EP2014/075395
(87) Internationale Veröffentlichungsnummer: WO 2015/075226

(56) Entgegenhaltungen:
- EP-A1- 2 360 003
- WO-A1-2005/021235
- JP-A- H02 182 363
- JP-A- S60 212 321
- JP-A- 2001 096 582
- US-A1- 2004 166 189
- US-A1- 2012 248 652
- US-B1- 6 514 440
- KAZMER D ET AL: "MULTI-CAVITY PRESSURE CONTROL IN THE FILLING AND PACKING STAGES OF THE INJECTION MOLDING PROCESS", POLYMER ENGINEERING AND SCIENCE, BROOKFIELD CENTER, US, Bd. 37, Nr. 11, 1. November 1997 (1997-11-01), Seiten 1865-1879, XP000776243, ISSN: 0032-3888, DOI: 10.1002/PEN.11837

## Beschreibung

Die Erfindung betrifft ein Verfahren zum Regeln der Füllung von zumindest einer Kavität in einer Vorrichtung zum Herstellen eines Gegenstands, insbesondere in einer Spritzgiessmaschine.

### Stand der Technik

Insbesondere beim Spritzgiessen aber auch beim Herstellen von Gegenständen durch andere Herstellungsverfahren, bei denen eine Masse, insbesondere eine Schmelze, in eine Kavität, in der der Gegenstand herausgeformt wird, eingebracht werden soll, stellt ein grosses Problem die Tatsache dar, dass sich die Füllung, aus welchen Gründen auch immer im Laufe der Zeit ändert, was zu unterschiedlichen Teilequalitäten führt. Aus diesem Grunde wird mit unterschiedlich guten Resultaten versucht, die Füllung der Kavitäten zu vergleichmässigen. Dies gilt sowohl für Einzel- wie auch für Mehrfach-Werkzeuge.

Werden z.B. Nadelverschlüssdüsen verwendet (siehe zum Beispiel US 6 514 440 B1), kann jede einzelne Nadelverschlussdüse wie ein Spritzaggregat einer Spritzgiessmaschine betrachtet werden. Werden Änderungen von Parameter, z.B. der Viskosität, gewünscht, ist es nur möglich, die Einstellung der Maschine zu verändern und ggf. sogar zu regeln. Als Konsequenz erfolgte der gesamte Spritzgiessvorgang in allen Verschlussdüsen nahezu gleichmässig (ungefähr gleiche Einspritzgeschwindigkeit bzw. Schmelzefrontgeschwindigkeit, gleiche Verdichtung etc.). Damit besteht keine Möglichkeit, auf unterschiedliche Eigenschaften (wie z.B. unterschiedliche Wanddicken) zu reagieren. Z.B. können grossflächige Formteile, wie z.B. Stossfänger, nur über den gesamten Querschnitt betrachtet werden, obwohl sie auch in Teilbereichen sehr wohl unterschiedliche Anforderungen aufweisen.

Beispielsweise wird in der DE 101 12 126 B4 ein Verfahren zum automatischen Balancieren der volumetrischen Füllung von Kavitäten beschrieben, wobei ein Temperaturverlauf in den Kavitäten ermittelt und für alle Kavitäten vergleichmässigt wird. In einem Mehrfach-Werkzeug wird dabei der zeitliche Versatz der Signale ermittelt. Ist der Anstieg der Signale der einzelnen Kavitäten identisch, sind diese automatisch gleichzeitig volumetrisch gefüllt.

In der DE 10 2004 031 546 A1 wird ein Verfahren zum Füllen von zumindest einer Kavität eines Werkzeugs beschrieben, wobei die Schmelze unter Druck aus einer Mehrzahl von Düsen in die Kavität eingeführt wird. Dabei ist bevorzugt jeder Düse ein Sensor zugeordnet, der den Schmelzestrom in der Kavität ermittelt, wobei anhand der Signale dieses Sensors der Einfüllvorgang durch die Düsen automatisch aufeinander abgestimmt wird.

In beiden Fällen kann eine Regelung dadurch erreicht werden, dass die Temperatur der einzelnen Heisskanaldüsen verändert wird, bis eine gleichmässige Füllung der Kavitäten erreicht ist. Hierbei ist es denkbar, dass die Schmelzefront am Ende des Fliesswegs auf Grund eines Signalanstiegs automatisch detektiert wird. Es ist aber ebenso möglich, dass beispielsweise ein Drucksensor in der Nähe des Anschnitts platziert wird und eine Druckschwelle für eine solche Regelung verwendet wird.

Bei einer anderen Anwendung handelt es sich nicht um ein Mehrfach-Werkzeug, sondern beispielsweise um ein Werkzeug mit nur einer Kavität. In diesem Fall wird der Schmelzefluss geregelt, indem über die Veränderung der Heisskanal-Düsentemperatur eine einmal optimierte Referenz-Füllzeit (beispielsweise zwischen zwei Düsen) konstant geregelt wird.

Die oben erwähnten Regelungen beziehen sich vor allem auf Heisskanal-Werkzeugen. Es gibt aber auch Kaltkanal-Werkzeuge, die nicht über Heisskanal-Düsen verfügen. Dies ist insbesondere dann der Fall, wenn es sich nicht um Thermoplaste, sondern um vernetzte Kunststoffe, wie Flüssig-Silikone, handelt. In solchen Fällen wird der Einspritzvorgang üblicherweise über sogenannte Nadelverschlussdüsen gesteuert. Derartige Nadelverschlussdüsen sind schon seit langer Zeit bekannt. Beispielsweise werden sie bereits in der DE 6913568, der DE 73 23 461 U beschrieben. Eine neuere Beschreibung findet sich in der DE 20 2010 014 740 U1. Diese werden zu einem bestimmten Zeitpunkt geöffnet und zu einem späteren Zeitpunkt wieder geschlossen, was jedoch gleichwohl zu einem unbalancierten Zustand führen kann.

Aus der WO 2005021235 A1 ist beispielsweise eine Nadelverschlussdüse bekannt. Zur Beeinflussung der Richtung der Schmelze in der Kavität kann die Nadel dieser Nadelverschlussdüse in drei unterschiedliche Positionen gebracht werden.

### Aufgabe

Aufgabe der vorliegenden Erfindung ist es, ein Verfahren der oben genannten Art zu entwickeln, mit dem auf einfache Art und Weise eine Regelung und insbesondere eine Balancierung der Füllung von Kavitäten erfolgen kann.

### Lösung der Aufgabe

Zur Lösung der Aufgabe führen die Merkmale von Anspruch 1.

Der grundsätzliche Erfindungsgedanke liegt darin, dass eine Öffnung, durch die eine Schmelze in eine Kavität eingebracht wird, nicht nur geschlossen oder geöffnet, sondern auch in eine Zwischenstellung gebracht werden kann. Bevorzugt ist diese Zwischenstellung ebenfalls nicht festgelegt, sondern kann vorgegebenen Werten oder geänderten Anforderungen aus einem Spritzzyklus angepasst werden. Sie können aber auch durch ein vorgegebenes Profil festgelegt sein.

Auf diese Weise kann der gesamte Spritzvorgang revolutioniert werden. Allein durch die Einstellung der Weite der Einspritzöffnung auch während dem Spritzzyklus anhand von zum Beispiel einem vorgegebenen Profil wird der gesamte Spritzvorgang gesteuert. Dies kann zum Beispiel völlig unabhängig von der Ausgestaltung eines vorgeschalteten Extruder oder einer vorgeschalteten Pumpe zur Zuführung der Kunststoffschmelze geschehen. Es genügt, wenn die Kunststoffschmelze an der Einspritzöffnung mit einem ausreichenden Druck ansteht, die Menge und die Geschwindigkeit an Kunststoff, die dann in die Kavität eingelassen wird, kann durch die Veränderung der Einspritzöffnung bestimmt werden. Das bedeutet aber auch, dass die vorgeschalteten Aggregate sehr einfach ausgelegt und gesteuert werden können.

Erreicht zum Beispiel eine Schmelzefront einen die Kavität überwachenden Temperatursensor zu spät, so genügt es, die Öffnungsweite der Einspritzöffnung zu erhöhen, so dass mehr Schmelze schneller in die Kavität eindringen kann, sofern der Druck gleich bleibt, mit der die Schmelze an der Öffnung ansteht.

Soll zum Beispiel zum Ende des Fliessweges auf Nachdruck umgeschaltet werden, so genügt es ebenfalls, wenn die Einspritzöffnung bei gleichbleibend anstehendem Schmelzedruck weiter geöffnet wird. Die vorliegende Erfindung lässt viele Möglichkeiten einer sehr einfachen Regelung der Einspritzung in eine Kavität zu, sodass hier eine abschliessende Aufzählung nicht möglich ist.

Natürlich liegt aber im Rahmen der Erfindung auch, dass einer derart veränderbaren Einspritzöffnung bekannte, die Schmelze in Druck und/oder Temperatur verändernde Aggregate vorgeschaltet sind. Die vorliegende Erfindung lässt nur die Möglichkeit der Verwendung sehr einfacher Aggregate offen.

Auch kann diese Weise für Kaltkanäle und Heisskanäle der Einspritzvorgang in einem Mehrfach-Werkzeug balanciert werden. Durch das individuelle Regeln jeder einzelnen Weite der Einspritzöffnung bzw. Verschlussdüse ist es möglich, für jede einzelne Öffnung bzw. Verschlussdüse individuelle Eigenschaften einzustellen. So ist es z.B. denkbar, eine Verschlussdüse in der Nähe des Airbags einer Instrumententafel mit weniger Verdichtung zu beaufschlagen (= Nadel der Verschlussdüse weiter geschlossen) als in einem dickwandigen Querschnitt. Die Möglichkeiten und Konsequenzen in der Praxis sind u.U. enorm.

Welche Parameter der in die Kavität eintretenden Schmelze ermittelt und welche Sensoren hierfür verwendet werden sollen, spielt für die vorliegende Erfindung eine untergeordnete Bedeutung. Der Grundgedanke der Erfindung bezieht sich darauf, dass eine Weite der Öffnung dazu verwendet wird, einen Füllvorgang einer oder mehrerer Kavitäten zu vergleichmässigen. Natürlich ist es auch möglich, den Füllvorgang einem vorgegebenen Referenzwert anzupassen.

Der Begriff Düse beziehungsweise Düsenöffnung soll im weiten Sinne verstanden werden. Im Rahmen der Erfindung liegt jede Öffnung, durch welche eine Schmelze in die Kavität eingebracht wird und deren Weite veränderbar ist. Nadelverschlussdüsen sind dabei nur eine Möglichkeit. Durch spezielle Antriebskomponenten ist es heute möglich, z. B. einen Verschlussnadelweg mit einer Auflösung von 0,005 mm zu justieren. Das bedeutet, dass eine Weite der Öffnung auch bei sehr kleinen Einspritzdüsen sehr genau und unabhängig voneinander eingestellt werden kann. Es geht bei der vorliegenden Erfindung darum, den Spritzgiessprozess zu regeln, indem eine oder mehrere Nadeln von Verschlussdüsen nicht nur geöffnet und geschlossen werden, sondern dass die Öffnung der einzelnen Nadeln in irgendeiner Position zwischen Öffnen und Schliessen geregelt wird.

Die Öffnung könnte aber auch durch eine Einrichtung ähnlich eines Kameraverschlusses bestimmt werden. Denkbar sind auch Schieber oder dergleichen zur Veränderung der Öffnungsweite.

Im bevorzugten Ausführungsbeispiel werden Temperatursensoren und/oder Drucksensoren verwendet. Denkbar sind aber auch andere Sensoren, wie beispielsweise elektrische Sensoren oder auch visuelle Sensoren, die einen Weg einer Schmelze beobachten. Auch hier soll der vorliegenden Erfindung keine Grenze gesetzt sein. Wesentlich ist allein, dass die Schmelze und deren Fortschritt in der Kavität beobachtet werden. Drucksensoren ermitteln den Druckverlauf in der Kavität, Temperatursensoren die Temperatur oder erkennen aber auch nur, wann die Schmelze beispielsweise bei einem entsprechenden Temperatursensor ankommt. In diesem Fall wirkt der Temperatursensor eher als normaler Schalter, welcher die Zeit ermittelt, welche eine Schmelze vom Eintritt in die Kavität bis zum Sensor braucht.

Im vorliegenden Fall werden vor allem Druck- bzw. Temperatursensoren verwendet, wie sie beispielsweise in der DE 10 2004 003 278 A1 beschrieben sind. Die Sensoren brauchen aber nicht direkt mit der Schmelze in Berührung zu kommen, sie können auch durch beispielsweise dünne Stege von der Kavität getrennt sein.

Neu ist vor allem die Möglichkeit, dass solche Regelungen automatisch mit Hilfe von Werkzeuginnendruck- und Werkzeugwandtemperatur-Sensoren durchgeführt werden, und dadurch von Zyklus zu Zyklus automatisch angepasst werden können. Die meisten der in der Vergangenheit bereits diskutierten Regelungen könnten somit unabhängig von der Spritzgiessmaschine auch für jede einzelne Verschlussdüse durchgeführt werden.

Es kommen folgende Regelungen in Frage:
a) Heisskanal-Balancierung über die Öffnungsweite der Nadelverschlussdüsen
b) Heisskanal-Regelung über die Öffnungsweite einer Nadelverschlussdüse (regelt den Schmelzestrom in einem bestimmten Bereich, z.B. anhand einer Referenz)
c) Kaltkanal-Balancierung über die Öffnungsweite der Nadelverschlussdüsen
d) Schergeschwindigkeitsregelung für jede einzelne Verschlussdüse über die Öffnungsweite der Nadelverschlussdüse. Das bedeutet, dass die Schergeschwindigkeit im Schmelzestrom über zwei Sensoren gemessen wird, und die Position der Nadel entsprechend verändert wird.
e) Schubspannungsregelung (analog zu d)
f) Sehr wichtig: Kompressionsregelung für jede einzelne Verschlussdüse über die Öffnungsweite der Nadelverschlussdüse. Das bedeutet, dass nach dem Einspritzvorgang bzw. nach dem Umschalten auf Nachdruck die Position der Düse wiederum verändert wird, um mehr oder weniger Kompression vor der jeweiligen Düse zu erzeugen. Gemessen wird hierbei der Werkzeuginnendruck bei einer Schwelle (z.B. bei 80 % des Maximalwertes) analog zur bereits realisierten Kompressionsregelung
g) Individuelle Regelung der Kühlzeit für jede einzelne Nadelverschlussdüse über die Öffnungsweite der Nadelverschlussdüse bei Heisskanälen (Thermoplaste). Das bedeutet, dass jede Düse individuell geschlossen wird, sobald die notwendige Kühlzeit für diesen Abschnitt erreicht wird.
h) Individuelle Regelung der Reaktionszeit für jede einzelne Nadelverschlussdüse über die Öffnungsweite der Nadelverschlussdüse bei Kaltkanälen (Duroplaste, LSR, Reaktionsverfahren wie RIM). Das bedeutet, dass jede Düse individuell geschlossen wird, sobald die notwendige Reaktionszeit für diesen Abschnitt erreicht wird.
i) Individuelle Regelung von Mehrkomponenten über die Öffnungsweite von Verschlussdüsen. Das bedeutet, dass eine beliebige Anzahl von Materialkomponenten individuell geregelt werden können.
j) Individuelle Regelung von Verschlussdüsen, die an einigen Düsen Einlegeteile umspritzen, an anderen aber nicht.
k) Individuelle Regelung von Verschlussdüsen, die Einlegeteile unterschiedlicher Grösse umspritzen
l) Individuelle Regelung von Verschlussdüsen, die bei Kaskadenverfahren je nach Position unterschiedlich geregelt werden sollen. Das bedeutet, dass der Fliessweg von der ersten bis zur zweiten Düse mit einer unterschiedlichen Geschwindigkeit oder Verdichtung erfolgt, im Gegensatz zum zweiten, dritten oder folgende Fliessweg
m) Individuelle Regelung von unterschiedlichen Teilen eines Familienwerkzeugs, bei dem die Eigenschaften für jedes einzelne Teil individuell einstellbar sind
n) Individuelle Regelung von Verschlussdüsen bei Gasinnendruck- und Wasserinjektionsverfahren

Diese Aufzählung ist aber keineswegs abschliessend!

Die meisten der genannten Regelungen, die im Rahmen der Erfindung natürlich nicht abschliessend sind, kommen für Kaltkanäle und Heisskanäle in Frage.

Von besonderer Bedeutung und hervorzuheben ist für alle Regelungen, dass nicht nur ein einziger Wert pro Düse eingestellt und geregelt werden kann, sondern auch ein ganzes Einstellprofil (für Düse öffnen und schliessen).Die Konsequenzen sind, dass der Prozess weitestgehend unabhängig von der Maschineneinstellung erfolgen kann, da es sich um eine Regelung im Werkzeug handelt. Auf teure Maschinenschnittstellen kann verzichtet werden. Viele Maschinenhersteller bieten eine solche Maschinenschnittstelle nicht einmal an.

Von der Erfindung wird auch eine Vorrichtung zur Durchführung des Verfahrens umfasst, bei welcher der Öffnung eine Einrichtung zum Verändern der Weite der Öffnung anhand von Signalen, die von zumindest einem Sensor in der Kavität kommen, zugeordnet ist. Dazwischen dürfte eine Regeleinheit geschaltet sein, welche die Signale miteinander und/oder mit vorgegebenen Signalen vergleicht und danach die Weite der Öffnung zur Vergleichmässigung des Einspritzvorganges regelt. Bevorzugt wird der Sensor quasi als Schalter verwendet, der in dem Fall reagiert, wenn ihn die Schmelzefront erreicht. In diesem Fall gibt er ein Signal ab, sodass die Regelung der Öffnungsweite beginnen kann.

## Patentansprüche

1. Verfahren zum Regeln der Füllung von zumindest einer Kavität in einer Vorrichtung zum Herstellen eines Gegenstands, insbesondere in einer Spritzgiessmaschine, wobei
eine Schmelze in die Kavität durch eine Öffnung eingebracht und deren Weite verändert wird,
die Weite der Öffnung auch in einer Stellung zwischen einer Schliessstellung und einer maximalen Öffnungsstellung verändert und ein- bzw. festgestellt wird,
eine Befüllung der Kavität und insbesondere der Eintritt der Schmelze und/oder eine Schmelzefront in die/der Kavität mittels Sensoren beobachtet und zum Regeln der Füllung die Weite der Öffnung verändert wird,
indem die Öffnung in eine Zwischenstellung gebracht wird, die vorgegebenen Werten oder geänderten Anforderungen aus einem Spritzzyklus oder einem vorgegebenen Profil angepasst wird,
**dadurch gekennzeichnet, dass**
eine Kompressionsregelung für jede einzelne Verschlussdüse über die Öffnungsweite der Nadelverschlussdüse erfolgt, indem nach dem Einspritzvorgang bzw. nach dem Umschalten auf Nachdruck die Position der Düse wiederum verändert wird, um mehr oder weniger Kompression vor der jeweiligen Düse zu erzeugen.

2. Verfahren nach Anspruch 1, **dadurch gekennzeichnet, dass** durch die Einstellung der Weite der Einspritzungsöffnung auch während dem Spritzzyklus anhand von zum Beispiel dem vorgegebenen Profil der gesamte Spritzvorgang gesteuert wird.

3. Verfahren nach Anspruch 1 oder 2, **dadurch gekennzeichnet, dass** solche Regelungen automatisch mit Hilfe von Werkzeuginnendruck- und Werkzeugwandtemperatur-Sensoren durchgeführt werden und dadurch von Zyklus zu Zyklus automatisch angepasst werden können.

4. Verfahren nach wenigstens einem der vorhergehenden Ansprüche, **dadurch gekennzeichnet, dass** die Kunststoffschmelze an der Einspritzöffnung mit einem ausreichenden Druck ansteht, die Menge und die Geschwindigkeit an Kunststoff, die dann in die Kavität eingelassen wird, durch die Veränderung der Einspritzöffnung bestimmt wird.

5. Verfahren nach wenigstens einem der vorhergehenden Ansprüche, **dadurch gekennzeichnet, dass** es sich bei der Öffnung um eine solche in einer Nadelverschlussdüse handelt, bei der die Weite der Öffnung durch eine Nadel bestimmt wird.

6. Verfahren nach wenigstens einem der Ansprüche 1 bis 5, **dadurch gekennzeichnet, dass** zumindest ein Temperatursensor und/oder ein Drucksensor in der Kavität zur Ermittlung von Parametern der Schmelze verwendet wird/werden.

7. Verfahren nach Anspruch 6, **dadurch gekennzeichnet, dass** ein Temperatursensor/Drucksensor gegen Ende eines Fliesswegs der Schmelze in der Kavität positioniert wird.

8. Verfahren nach Anspruch 6 oder 7, **dadurch gekennzeichnet, dass** ein Temperatursensor/Drucksensor in der Nähe eines Anschnitts positioniert wird.

9. Verfahren nach wenigstens einem der vorhergehenden Ansprüche, **dadurch gekennzeichnet, dass** eine Mehrzahl von Kavitäten entsprechend beobachtet und aufeinander abgeglichen werden.

10. Verfahren nach wenigstens einem der Ansprüche 4-9, **dadurch gekennzeichnet, dass** eine Kompressionsregelung für jede einzelne Verschlussdüse über die Öffnungsweite der Nadelverschlussdüse erfolgt.

11. Verfahren nach Anspruch 10, **dadurch gekennzeichnet, dass** nach dem Einspritzvorgang bzw. nach dem Umschalten auf Nachdruck die Position der Nadel wiederum verändert wird, um mehr oder weniger Kompression vor der jeweiligen Düse zu erzeugen.

12. Vorrichtung zur Durchführung des Verfahrens nach wenigstens einem der Ansprüche 1-11, **dadurch gekennzeichnet, dass** der Öffnung eine Einrichtung zum Verändern der Weite der Öffnung anhand von Signalen, die von zumindest einem Sensor in der Kavität kommen, zugeordnet ist.

13. Vorrichtung nach Anspruch 12, **dadurch gekennzeichnet, dass** der Sensor als Schalter für die Veränderung der Weite der Öffnung verwendbar ist.

## Claims

1. Method for regulating the filling of at least one cavity in a device for manufacturing an object, in particular in an injection moulding machine, wherein
a melt is introduced into the cavity through an opening and its width is changed,
the width of the opening is also changed in a position between a closed position and a maximum open position and is locked or fixed,
a filling of the cavity and in particular the entry of the melt and/or a melt front into the cavity(s) is observed by sensors and the width of the opening is changed to control the filling,
by moving the opening to an intermediate position, adjusting the specified values or changing requirements from an injection cycle or a specified profile,
**characterised in that**
a compression control for each individual shut-off nozzle takes place via the opening width of the valve gate nozzle by changing the position of the nozzle again after the injection process or after switching to holding pressure in order to generate more or less compression in front of the respective nozzle.

2. Method according to claim 1, **characterized in that** the entire injection process is controlled by adjusting the width of the injection opening also during the injection cycle on the basis, for example, of the predetermined profile.

3. Method according to claim 1 or 2, **characterised in that** such controls are carried out automatically with the aid of cavity pressure and cavity wall temperature sensors and can thus be automatically adapted from cycle to cycle.

4. Method according to at least one of the preceding claims, **characterized in that** the plastic melt is present at the injection opening with a sufficient pressure, the amount and the speed of plastic which is then admitted into the cavity is determined by the change of the injection opening.

5. Method according to at least one of the preceding claims, **characterised in that** the orifice is one in a needle shut-off nozzle, in which the width of the orifice is determined by a needle.

6. Method according to at least one of claims 1 to 5, **characterised in that** at least one temperature sensor and/or one pressure sensor in the cavity is/are used to determine parameters of the melt.

7. Method according to claim 6, **characterized in that** a temperature sensor/pressure sensor is/are positioned towards the end of a flow path of the melt in the cavity.

8. Method according to claim 6 or 7, **characterized in that** a temperature sensor/pressure sensor is positioned in the vicinity of a gate.

9. Method according to at least one of the preceding claims, **characterized in that** a plurality of cavities are observed and adjusted to one another accordingly.

10. Method according to at least one of the claims 4-9, **characterized in that** a compression control for each individual shut-off nozzle is carried out via the opening width of the needle shut-off nozzle.

11. Method according to claim 10, **characterized in that** after the injection process or after switching to holding pressure, the position of the needle is again changed in order to generate more or less compression in front of the respective nozzle.

12. Device for carrying out the method according to at least one of claims 1-11, **characterized in that** the orifice is associated with means for changing the width of the orifice on the basis of signals coming from at least one sensor in the cavity.

13. Device according to claim 12, **characterized in that** the sensor can be used as a switch for changing the width of the opening.

## Revendications

1. Procédé pour régler le remplissage d'au moins une cavité dans un dispositif de fabrication d'un objet, en particulier dans une machine de moulage par injection, dans lequel
une masse fondue est introduite dans la cavité à travers une ouverture dont la largeur est modifiée,
la largeur de l'ouverture est également modifiée et réglée ou fixée dans une position comprise entre une position de fermeture et une position d'ouverture maximale,
un remplissage de la cavité et en particulier l'entrée de la masse fondue et/ou d'un front de masse fondue dans la cavité est observé au moyen de capteurs et la largeur de l'ouverture est modifiée pour régler le remplissage,
en amenant l'ouverture dans une position intermédiaire qui est adaptée à des valeurs prédéterminées ou à des exigences modifiées d'un cycle d'injection ou à un profil prédéterminé,
**caractérisé par le fait que**
un réglage de compression pour chaque buse d'obturation individuelle a lieu par l'intermédiaire de la largeur d'ouverture de la buse à obturateur à aiguille en modifiant à nouveau la position de la buse après l'opération d'injection ou après la commutation à la force pour générer plus ou moins de compression devant la buse respective.

2. Procédé selon la revendication 1, **caractérisé par le fait que** toute l'opération d'injection est commandée par le réglage de la largeur de l'ouverture d'injection, même pendant le cycle d'injection, à l'aide, par exemple, du profil prédéterminé.

3. Procédé selon la revendication 1 ou 2, **caractérisé par le fait que** de tels réglages sont effectués automatiquement à l'aide de capteurs de pression intérieure de moule et de température de paroi de moule et peuvent ainsi être adaptés automatiquement d'un cycle à l'autre.

4. Procédé selon au moins l'une des revendications précédentes, **caractérisé par le fait que** la matière plastique fondue est présente à l'ouverture d'injection avec une pression suffisante, que la quantité et la vitesse de la matière plastique qui est alors introduite dans la cavité sont déterminées par la modification de l'ouverture d'injection.

5. Procédé selon au moins l'une des revendications précédentes, **caractérisé par le fait qu'**il s'agit, pour l'ouverture, d'une ouverture dans la buse à obturateur à aiguille dans laquelle la largeur de l'ouverture est déterminée par une aiguille.

6. Procédé selon au moins l'une des revendications 1 à 5, **caractérisé par le fait qu'**au moins un capteur de température et/ou un capteur de pression dans la cavité est/sont utilisés pour déterminer les paramètres de la masse en fusion.

7. Procédé selon la revendication 6, **caractérisé par le fait qu'**un capteur de température/capteur de pression est positionné à l'extrémité d'un trajet d'écoulement de la masse en fusion dans la cavité.

8. Procédé selon la revendication 6 ou 7, **caractérisé par le fait qu'**un capteur de température/capteur de pression est positionné à proximité d'une entrée.

9. Procédé selon au moins l'une des revendications précédentes, **caractérisé par le fait qu'**une pluralité de cavités sont observées de manière appropriée et comparées entre elles.

10. Procédé selon au moins l'une des revendications 4 à 9, **caractérisé par le fait qu'**un réglage de compression a lieu pour chaque buse d'obturation individuelle par l'intermédiaire de la largeur d'ouverture de la buse à obturateur à aiguille.

11. Procédé selon la revendication 10, **caractérisé par le fait qu'**après l'opération d d'injection ou après la commutation à la force pour générer plus ou moins de compression devant la buse respective.

12. Dispositif pour la mise en œuvre du procédé selon au moins l'une des revendications 1 à 11, **caractérisé par le fait qu'**à l'ouverture est associé un dispositif de modification de la largeur de l'ouverture à l'aide de signaux qui émanent d'au moins un capteur dans la cavité.

13. Dispositif selon la revendication 12, **caractérisé par le fait que** le capteur peut être utilisé comme interrupteur pour modifier la largeur de l'ouverture.
